(19)

Europäisches
Patentamt

European
Patent Office

Office européen
des brevets

(11) **EP 4 130 353 A1**

(12) **EUROPEAN PATENT APPLICATION**
published in accordance with Art. 153(4) EPC

(43) Date of publication:
**08.02.2023 Bulletin 2023/06**

(21) Application number: **20928794.5**

(22) Date of filing: **31.03.2020**

(51) International Patent Classification (IPC):
*D01F 6/60* (1974.07)   *D01F 6/90* (1974.07)
*D01F 1/10* (1974.07)   *C08G 69/26* (1974.07)
*C08G 69/28* (1974.07)   *D01D 5/08* (1968.09)
*D01D 5/088* (1980.01)   *D01D 5/098* (1985.01)
*D01D 5/12* (1968.09)   *D01D 10/02* (1985.01)

(52) Cooperative Patent Classification (CPC):
**C08G 69/26; C08G 69/28; D01D 5/08; D01D 5/088;
D01D 5/098; D01D 5/12; D01D 10/02; D01F 1/10;
D01F 6/60; D01F 6/90**

(86) International application number:
**PCT/CN2020/082600**

(87) International publication number:
**WO 2021/196032 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Cathay Biotech Inc.**
  **Shanghai 201203 (CN)**
• **Cibt America Inc.**
  **Newark DE 19713 (US)**
• **Cathay (Wusu) Biomaterial Co., Ltd.**
  **Xinjiang 833000 (CN)**

(72) Inventors:
• **SUN, Chaoxu**
  **Shanghai 201203 (CN)**
• **CHEN, Wanzhong**
  **Shanghai 201203 (CN)**
• **GAO, Xiang**
  **Shanghai 201203 (CN)**
• **LIU, Xiucai**
  **Shanghai 201203 (CN)**

(74) Representative: **Høiberg P/S**
  **Adelgade 12**
  **1304 Copenhagen K (DK)**

(54) **INDUSTRIAL POLYAMIDE YARN, PREPARATION METHOD THEREFOR, AND USE THEREOF**

(57)    Disclosed are an industrial polyamide yarn, a preparation method therefor, and the use thereof. The raw materials for producing the industrial polyamide yarn include at least 1,5-pentanediamine and a linear aliphatic dibasic acid; or polyamide 5X obtained by the polymerization of 1,5-pentanediamine and a linear aliphatic dibasic acid as monomers. The industrial polyamide yarn according to an embodiment has the characteristics of a low water absorption, a good dimensional stability, a high fracture strength, and a good heat resistance.

EP 4 130 353 A1

**Description**

**Technical Field**

The present disclosure relates to an industrial yarn, and specifically provides a polyamide industrial yarn with low water absorption and good dimensional stability.

**Background of Art**

Polyester and nylon high-strength yarns have the characteristics of high strength, low elongation, good dimensional stability, fatigue resistant and aging resistant, making them widely used in tire cords, canvas, conveyor belts, airbags, parachutes, ropes, safety belts , industrial filtering cloth, tents or other fields.

There are two production processes for high-strength yarn: one is the direct spinning method with high-viscosity melt, and the other is the indirect spinning method with chips after solid-state polycondensation.

At present, high-strength industrial yarns are mainly polyester, polyamide 6 and polyamide 66, while polyester industrial yarns have poor abrasion resistance and poor adhesion to rubber. Polyamide 6 and polyamide 66 have high water absorption, and the polyamide industrial yarn prepared therefrom has a high moisture regain, is easily deformed by water absorption, and thus has poor dimensional stability in the subsequent application processes.

**Summary of the Invention**

A main objective of the present disclosure is to provide a high-strength polyamide industrial yarn with low water absorption, good dimensional stability and good heat resistance, the production raw materials of which at least include: 1,5-pentanediamine and a linear aliphatic dibasic acid; or polyamide 5X obtained from polymerization of 1,5-pentanediamine and a linear aliphatic dibasic acid as monomers.

An embodiment of the present disclosure also provides a method for preparing polyamide industrial yarn, comprising the following steps:

(1) heating the raw materials to a molten state to form a melt, the raw materials comprise a polyamide 5X resin;

(2) drawing the melt to form un-drawn yarn; and

(3) subjecting the un-drawn yarn to heat preservation, cooling, oiling, pre-tangling, multi-stage drawing, main tangling and winding to obtain the polyamide industrial yarn;

wherein a tension heat-setting treatment and/or relaxation heat-setting treatment are performed in any one stage of multi-stage drawing.

An embodiment of the present disclosure further provides the use of the above polyamide industrial yarn in sewing thread, tire cord, airbag yarn, mold-releasing cloth, water cloth, canvas, safety belt, rope, fishing net, industrial filtering cloth, conveyor belt, parachute, tent or luggage.

The polyamide industrial yarn of an embodiment of the present disclosure has the characteristics of low water absorption, good dimensional stability, high breaking tenacity and good heat resistance.

**Best modes of carrying out the present invention**

Exemplary embodiments embodying the features and advantages of the invention will be described in detail in the following description. It should be understood that the present disclosure is capable of various changes in different embodiments, all without departing from the scope of the present disclosure, and the descriptions herein are intended to be illustrative in nature and not intended to limit the present disclosure.

An embodiment of the present disclosure provides an industrial yarn, the raw materials of producing the industrial yarn at least include: 1,5-pentanediamine and a linear aliphatic dibasic acid; or polyamide 5X obtained from polymerization of 1,5-pentanediamine and a linear aliphatic dibasic acid as monomers.

In one embodiment, the linear aliphatic dibasic acid contains 6 to 18 carbon atoms, such as 7, 8, 9, 10, 11, 12, 13, 14, 15, 16, 17.

In one embodiment, the linear aliphatic dibasic acid may be a saturated dibasic acid.

In one embodiment, the linear aliphatic dibasic acid may contain one carbon-carbon double bond.

In one embodiment, the linear aliphatic dibasic acid may be one or more of adipic acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, octadecanedioic acid, maleic acid and Δ9-1,18 octadecenedioic acid.

In one embodiment, the linear aliphatic dibasic acid may be one or more of sebacic acid, undecanedioic acid and dodecanedioic acid.

In one embodiment, 1,5-pentanediamine and/or the linear aliphatic dibasic acid may be prepared by fermentation or enzymatic conversion.

The industrial yarn of an embodiment of the present disclosure comprises polyamide 5X, which may also be referred to as polyamide 5X industrial yarn.

In one embodiment, the polyamide 5X industrial yarn comprises one or more of polyamide 56, polyamide 510, polyamide 511, polyamide 512, polyamide 513, polyamide 514, polyamide 515, polyamide 516, polyamide 517 and polyamide 518.

In one embodiment, the polyamide 5X industrial yarn comprises one or more of polyamide 510, polyamide 511 and polyamide 512.

In one embodiment, the polyamide 5X industrial yarn has a moisture regain of ≤2.2%, may further be ≤2.1%, and may further be <_1.9%, such as 0.9%, 1.5%, 1.8%, 2.0%, etc.

In one embodiment, the moisture regain of the polyamide 5X industrial yarn may be 0.9 to 2.2%.

In one embodiment, the breaking tenacity of the polyamide 5X industrial yarn is 7.5 to 9.5cN/dtex, may further be 7.8 to 9.0cN/dtex, and may further be 8.0 to 8.5cN/dtex, such as 7.9cN/dtex, 8.1 cN/dtex, 8.2cN/dtex, 8.3cN/dtex, 8.4cN/dtex, etc.

In one embodiment, after the polyamide 5X industrial yarn is heated at 160°C for 4 hours, the retention rate of the heat-resistant strength is >_85%, may further be >_88%, and may further be >_92%, such as 90%, 91% , 92%, 93%, 94%, 95%, etc.

In one embodiment, the polyamide 5X industrial yarn has a retention rate of the heat-resistant strength of 85 to 95%.

In one embodiment, after the polyamide 5X industrial yarn is heated at 160°C for 4 hours, the retention rate of the heat-resistant strength is 85 to 95%.

**In** one embodiment, after humidity conditioning, the polyamide industrial yarn has a retention rate of the breaking tenacity of ≥92%, may further be >_94%, and may further be >_96%, indicating that the polyamide 5X industrial yarn has a low water absorption and a high retention rate of breaking tenacity.

In one embodiment, the polyamide 5X industrial yarn has an elongation at break of 16 to 24%, may further be 18 to 22%, and may further be 19 to 21%, such as 19.5%, 20%, 20.5%, etc.

In one embodiment, the polyamide 5X industrial yarn has a modulus of ≥35cN/dtex, may further be >_38cN/dtex, and may further be >_42cN/dtex, such as 42.5cN/dtex, 43cN/dtex, 43.5cN/dtex, 44cN/dtex, 44.5cN/dtex, 45cN/dtex, 45.5cN/dtex, 46cN/dtex, 46.5cN/dtex, 47cN/dtex, 47.5cN/dtex, 48cN/dtex, etc.

In one embodiment, the the polyamide 5X industrial yarn has a modulus of 35 to 50 cN/dtex.

In one embodiment, the polyamide 5X industrial yarn has a heat shrinkage of ≤ 10.0%, may further be <_8.0%, and may further be <_6.0%, such as 6.5%, 7.0%, 7.5%, 8.0%, 8.5%, etc.

In one embodiment, the polyamide 5X industrial yarn has a heat shrinkage of 6.0-10.0%.

In one embodiment, the polyamide 5X industrial yarn has a boiled water shrinkage of ≤ 9.0%, may further be <_8.0%, and may further be <_7.0%, such as 6.0%, 6.2%, 6.5%, 6.8%, 7.0% , 7.5%, 7.9%, etc.

In one embodiment, the polyamide 5X industrial yarn has a boiled water shrinkage of 6.0-9.0%.

In one embodiment, the polyamide 5X industrial yarn has an elongation after boiled in water of ≤ 25.0%, such as 20%, 20.5%, 21%, 21.5%, 22%, 22.5%, 23%, 23.5%, 24%, 24.5%, etc.

In one embodiment, the polyamide 5X industrial yarn has an elongation after boiled in water of 20 to 25%.

In one embodiment, the polyamide 5X industrial yarn has a number of times of monofils breaking of ≤5/24h, may further be ≤3/24h, and may further be ≤2/24h, for example, 4/24h.

In one embodiment, the polyamide 5X industrial yarn has a number of times of monofils breaking of 2 to 5/24h.

In one embodiment, the amount of broken filaments of polyamide 5X industrial yarn is <_10 pieces/1 bobbin (10 kg roll-package), may further be <_8 pieces/1 bobbin, may further be <_5 pieces/1 bobbin, for example, 2 pieces/1 bobbin, 3 pieces/1 bobbin, 4 pieces/1 bobbin, 5 pieces/1 bobbin, 7 pieces/1 bobbin, etc.

In one embodiment, the amount of broken filaments of polyamide 5X industrial yarn is 2 to 10 pieces/1 bobbin.

In one embodiment, the production rate of polyamide 5X industrial yarn is ≥90%, may further be >_93%, and may further be >_95%, such as 96%, 97%, 98%, etc.

In one embodiment, the polyamide 5X industrial yarn is obtained from spinning raw materials through a spinning process, and the spinning raw materials include a polyamide 5X resin.

In one embodiment, the polyamide 5X resin has a relative viscosity in 96% sulfuric acid of 2.8 to 4.0, may further be 3.0 to 3.7, and may further be 3.3 to 3.6, such as 2.9, 3.1, 3.2, 3.4, 3.5, 3.8, 3.9, etc.

In one embodiment, the polyamide 5X resin contains additives.

In one embodiment, the polyamide 5X resin is prepared by using 1,5-pentanediamine and a linear aliphatic dibasic acid as raw materials, and the adopted processes may be those used in the prior art.

In one embodiment, the method for preparing a polyamide 5X resin comprises: firstly, mixing 1,5-pentanediamine, linear aliphatic dibasic acid and water to prepare a salt solution of polyamide 5X; followed by subjecting the resulting salt solution of polyamide 5X to polycondensation and dehydration to obtain a polyamide 5X resin.

In one embodiment, the method for preparing a polyamide 5X resin comprises the following steps:

S1: mixing 1,5-pentanediamine, a linear aliphatic dibasic acid and water evenly to obtain a salt solution of polyamide 5X; wherein the molar ratio of 1,5-pentanediamine and the linear aliphatic dibasic acid is (1 to 1.05):1

S2: heating the salt solution of polyamide 5X to carry out a polymerization reaction to obtain polyamide 5X.

In one embodiment, step S2 comprises heating the salt solution of polyamide 5X, raising the pressure in the reaction system to 0.3 to 2.5MPa, venting, maintaining the pressure, making the temperature of the reaction system 232 to 265°C at the end of pressure-maintaining, then reducing the pressure in the reaction system to 0 to 0.2 MPa (gauge pressure), maintaining it for 5 to 30 minutes, and after the depressurization is completed, the temperature of the reaction system is 245 to 280°C, followed by subjecting to vacuum.

In one embodiment, additives may be added in any one or more stages of the above steps S1 and S2. Further, additives may be added in step S1, or added in step S2 before heating to carry out the polymerization reaction.

In one embodiment, the additive comprises a thermal stabilizer and/or a second additive, and the thermal stabilizer comprises one or more of copper acetate, potassium iodide, copper chloride, cuprous iodide, cupric oxide, and cuprous oxide.

In one embodiment, the addition amount of the thermal stabilizer accounts for 20 to 3000 ppm of the total weight of the polyamide 5X salt formed from the reaction of 1,5-pentanediamine and the linear aliphatic dibasic acid, and may further be 80 to 2500 ppm, and may further be 200 to 2200 ppm.

In one embodiment, the thermal stabilizer comprises copper acetate and potassium iodide, and the molar ratio of copper acetate and potassium iodide is 1:(1 to 15), and may be 1:(5 to 13), such as 1:6, 1:8 , 1:10, 1:12, etc.

In one embodiment, the second additive may comprise one or more of a matting agent, a flame retardant, an antioxidant, an ultraviolet absorber, an infrared absorber, a crystal nucleating agent, a fluorescent brightener and an antistatic agent.

In one embodiment, the second additive comprises an antioxidant and/or a crystal nucleating agent.

In one embodiment, the antioxidant may comprise one, two or more of antioxidant 1010, antioxidant 1076, antioxidant TPP, antioxidant TNP, antioxidant 164, antioxidant DNP, sodium hypophosphite, calcium hypophosphite.

In one embodiment, the crystal nucleating agent may comprise one or more of nano-montmorillonite, nano-talc, nano-$SiO_2$, nano-$Al_2O_3$, nano-$ZrO_2$, nano-$TiO_2$ and nano-P200.

In one embodiment, the addition amount of the second additive accounts for 0 to 1000 ppm, such as 1 ppm, 5 ppm, 10 ppm, 50 ppm, 100 ppm, 200 ppm, 500 ppm, 800 ppm, etc, of the total weight of the polyamide 5X salt formed from the reaction of 1,5-pentanediamine and linear aliphatic dibasic acid.

An embodiment of the present disclosure provides a method for preparing the above-mentioned polyamide 5X industrial yarn, comprising the following steps:

(1) heating the spinning raw materials to a molten state to form a melt, the spinning raw materials comprise the polyamide 5X resin;

(2) conveying the melt through a pipeline into a spinning head for drawing to form un-drawn yarn; and

(3) subjecting the un-drawn yarn to heat preservation, cooling, oiling, pre-tangling, multi-stage drawing, main tangling and windingto obtain the polyamide industrial yarn; a tension heat-setting treatment and/or relaxation heat-setting treatment are performed in any one stage of the multi-stage drawing.

In one embodiment, the polyamide 5X resin in step (1) is a high-viscosity polyamide 5X resin, and the relative viscosity of the high-viscosity polyamide 5X resin in 96% sulfuric acid is 2.8-4.0, may further be 3.0 to 3.7, and may further be 3.3 to 3.6, such as 2.9, 3.1, 3.2, 3.4, 3.5, 3.8, 3.9, etc.

In an embodiment, due to the addition of additives in the polyamide 5X resin, the spinning raw materials contain copper ions, and the copper ion content is 0 to 300 ppm, may further be 30 to 200 ppm, and may further be 50 to 100 ppm, the above content is based on the total weight of the high-viscosity polyamide 5X resin.

In one embodiment, the water content of the high-viscosity polyamide 5X resin is 100 to 1000 ppm, may further be 200 to 800 ppm, may further be 400 to 600 ppm, such as 150 ppm, 300 ppm, 350 ppm, 500 ppm, 550 ppm, 700 ppm, 900 ppm, etc. The water content of the high-viscosity polyamide 5X resin is kept within the above ranges, which can avoid melt degradation during the preparation of industrial yarns, so that the prepared industrial yarns have high breaking tenacity, high modulus, less number of times of monofils breaking and less amount of broken filaments, and high production rate.

In one embodiment, the preparation of the high-viscosity polyamide 5X resin comprises the following steps: first, subjecting the low-viscosity polyamide 5X resin having a relative viscosity of 2.2 to 2.7 to high-temperature drying treatment to obtain a tackified polyamide 5X resin; then subjecting the obtained tackified polyamide 5X resin to resin humidity conditioning treatment to obtain a high-viscosity polyamide 5X resin.

In one embodiment, the relative viscosity of the low-viscosity polyamide 5X resin in 96% sulfuric acid may be 2.2 to 2.7, and may further be 2.4 to 2.6, such as 2.3, 2.5, etc.

In one embodiment, the high-temperature drying treatment is performed under vacuum (negative pressure state) or inert gas protection, and the vacuum degree during vacuuming is -0.06 to -0.1MPa, such as -0.07MPa, -0.08MPa, -0.09MPa, etc.

In one embodiment, the temperature of the high-temperature drying treatment is 130 to 160°C, and may further be 140 to 150°C, such as 135°C, 145°C, 155°C, etc.

In one embodiment, the time of the high-temperature drying treatment is 10 to 25 h, and may further be 15 to 20 h, for example, 12 h, 16 h, 18 h, 22 h, and 24 h.

In one embodiment, the device for performing the high-temperature drying treatment is a vacuum drum dryer or a continuous dehumidifying thermal nitrogen dryer.

In one embodiment, the resin humidity conditioning treatment is performed at a temperature of 85 to 110°C, for example, 90°C, 95°C, 100°C, 105°C, etc.

In one embodiment, the resin humidity conditioning treatment is performed by using nitrogen mixed with water steam, and the nitrogen dew point is controlled at -15 to 15°C, such as -12°C, -10°C, -8°C, -5°C, 0°C, 2°C°C, 5°C, 8°C, 10°C, 12°C, etc.

In one embodiment, said heating in step (1) is performed in a screw extruder, and the screw extruder is divided into five zones for heating, and the temperature in the first zone is 220 to 250°C, such as 225°C, 230°C, 235°C, 240°C, 245°C, etc; the temperature in the second zone is 230 to 260°C, such as 235°C, 240°C, 245°C, 250°C, 255°C, etc; the temperature in the third zone is 240 to 270°C, such as 245°C, 250°C, 255°C , 260°C, 265°C, etc; the temperature in the fourth zone is 250 to 280°C, such as 255°C, 260°C, 265°C, 270°C, 275°C, etc; the temperature in the fifth zone is 260 to 290°C, such as 265°C, 270°C, 275°C, 280°C, 285°C, etc.

In one embodiment, the drawing in step (2) comprises ejecting the melt obtained in step (1) through a spinneret of a spinning head to prepare the un-drawn yarn.

In one embodiment, the temperature of the spinning head is 260 to 290°C, may further be 270 to 285°C, and may further be 275 to 280°C.

In one embodiment, the pressure of the spinning assembly of the spinning head is 10 to 22 MPa, may further be 14 to 20 MPa, and may further be 17 to 18 MPa.

In one embodiment, in step (3), an annealer is used for heat preservation, and the annealing height may be 100 to 300 mm, and may further be 200 to 250 mm, such as 120 mm, 150 mm, 220 mm, 230 mm, 240 mm, etc; the annealing temperature may be 200 to 300°C, and may be 230-280°C, for example, 210 °C, 240°C, 250°C, 260°C, 270°C, etc.

In one embodiment, said cooling in step (3) is air cooling by side blowing or ring blowing, and the wind speed of air cooling may be 0.5 to 0.9m/s, and may further be 0.6 to 0.8m/s; the air temperature of air cooling may be 16 to 23°C, may further be 18 to 20°C; the air humidity of air cooling may be 60 to 90%, may further be 75 to 85%.

In one embodiment, the concentration of the spin finish used in said oiling of step (3) is 8 to 100 wt %.

In one embodiment, the concentration of the spin finish is 100 wt % without dilution.

In one embodiment, the spin finish may be selected from one or more of N-350 (provided by Matsumoto Oil Pharmaceutical Co., Ltd., Japan), N-353 (provided by Matsumoto Oil Pharmaceutical Co., Ltd., Japan), NEO TEX-903(A) (Shanghai Bicam Chemical Co., Ltd.), D-3088 (provided by Nantong Hengrun Chemical), TCP-60 nylon industrial yarn/cord spin finish(provided by Tianjin Gongda Textile Auxiliary Co., Ltd.), TCP-80 nylon industrial yarn/cord spin finish(provided by Tianjin Gongda Textile Auxiliary Co., Ltd.), TC1152 (provided by Zschimmer & Schwarz, Germany), TC1355 (provided by Zschimmer & Schwarz, Germany), TC-14686 (provided by GOULSTON TECHNOLOGIES, Inc., 700 North Johnson St., Monroe, NC 28110) ; may further be one or more of TC1355, TC-14686, TCP-60, TCP-80.

In one embodiment, the concentration of the spin finish is 8 to 25 wt %, may further be 9 to 15 wt %, and may further be 10 to 12 wt %.

In one embodiment, said oiling may be one or two oiling process(es) performed by an oiling jet, a spin finish roll, or an oiling lip, etc.

In one embodiment, two processes with an oiling lip, one process with a spin finish roll and one process with an oiling lip are used for said oiling.

In one embodiment, the distance of the oiling lip from the spinneret is >_2.Sm, may further be >_3.Om, and may further be ≥4.0m.

In one embodiment, the oil pick-up may be 0.7 to 1.2%, may further be 0.8 to 1.1%, and may further be 0.9 to 1.0%.

In one embodiment, the pressure of said pre-tangling in step (3)may be 1 to 2.5 bar, and may further be 1.5 to 2.0 bar.

In one embodiment, said drawing process in step (3) adopts 4 or more pairs of hot rollers for drawing, for example, 5 pairs of hot rollers may be used to draw, and the drawing process may be divided into four stages as follows: the un-drawn yarn after oiling is first fed to the first pair of hot rollers, and the first-stage pre-drawing is performed between the first pair of hot rollers and the second pair of hot rollers, then the second-stage main drawing is performed between the second pair of hot rollers and the third pair of hot rollers, followed by the third-stage main drawing between the third pair of hot rollers and the fourth pair of hot rollers, and tension heat-setting is also performed, then the fourth-stage of secondary drawing is performed between the fourth pair of hot rollers and the fifth pair of hot rollers, and relaxation heat-setting is also performed.

In one embodiment, the speed relaxation of the fourth pair of hot rollers and the fifth pair of hot rollers may be 30 to 100 m/min, and may further be 50 to 80 m/min; wherein, the "relaxation" refers to the difference in rotational speed among different heat rollers.

In one embodiment, the total draw ratio of said drawing in step (3) may be 4.5 to 6.0, and may further be 4.8 to 5.3.

In one embodiment, the temperature of the tension heat-setting may be 150 to 200°C, and may further be 160 to 180°C, such as 155°C, 165°C, 170°C, 175°C, 178°C, 190°C, etc.

In one embodiment, the temperature of relaxation heat-setting may be 100 to 160°C, may further be 120 to 140°C, such as 110°C, 125°C, 130°C, 135°C, 138°C, 150°C, etc.

In one embodiment, the pressure of said main tangling may be 2.5 to 4.0 bar, and may further be 3.0 to 3.5 bar.

In one embodiment, the winding speed may be 2000 to 3500 m/min, may further be 2300 to 3200 m/min, may further be 2600 to 2800 m/min, such as 2500 m/min, 2700 m/min, 3000 m/min, etc.

An embodiment of the present disclosure provides the use of the above-mentioned polyamide 5X industrial yarn in the fields of sewing thread, tire cord, airbag yarn, mold-releasing cloth, water cloth, canvas, safety belt, rope, fishing net, industrial filtering cloth, conveyor belt, parachute, tent, or luggage etc.

The raw material of producing the high-viscosity polyamide 5X resin used in one embodiment of the present disclosure is made by biological method, and the bio-based content is 100%. It is a green material, which does not rely on petroleum resources and does not cause serious pollution to the environment, and can reduce carbon dioxide emissions to reduce the greenhouse effect.

During the production of the polyamide 5X industrial yarn according to an embodiment of the present disclosure has less number of times of monofils breaking and less amount of broken filaments, high production efficiency, and low production cost.

The polyamide 5X industrial yarn of an embodiment of the present disclosure may be obtained by using apparatus conventionally used for polyamide 6 and polyamide 66 industrial yarn without the need to modify the spinning apparatus. By optimizing the quality and spinning process of the high-viscosity polyamide 5X resin, the production rate can be improved, the production cost can thus be reduced, and the spinnimg enterprises can be greatly benefited.

## Best modes of carrying out the present invention

Hereinafter, the polyamide 5X industrial yarn and the preparation method thereof according to an embodiment of the present disclosure will be further described with reference to specific examples. Among them, unless otherwise specified, all the raw materials used can be obtained commercially. The performance parameters and testing methods involved are as follows:

(1) Breaking tenacity:
Determined according to GB/T 14344-2008.

(2) Modulus:
Determined according to GB/T 14344-2008.

(3) Retention rate of the heat-resistant strength :
Retention rate of the heat-resistant strength = (breaking tenacity after heat treatment/breaking tenacity before heat treatment) $\times$ 100%, breaking tenacity is determined according to GB/T 14344-2008, the device for said heat treatment is an oven, the oven temperature is 160 °C, and the treatment time is 4h.

(4)

Retention rate of the breaking tenacity after humidity conditioning= (breaking tenacity after humidity conditioning/breaking tenacity before humidity conditioning)×100%.

Humidity conditioning: Put the polyamide industrial yarn into a temperature and humidity-constant room, the temperature is 20°C, the relative humidity is 65%, and the humidity is adjusted to equilibrium according to GB/T 6529-2008.

(5) Elongation at break:
Determined according to GB/T 14344-2008.

(6) Heat shrinkage:
Performed according to FZ/T 50004 regulation, the heating temperature is 160°C and the heating time is 2 min.

(7) Moisture regain:
Determination of moisture regain is performed as follows: placing the washed polyamide fiber in a loose state in an oven for drying, and then placing the dried polyamide fiber sample in the standard atmosphere specified in GB/T6529 to adjust the humidity to equilibrium. Measuring the moisture regain of the samples after humidity conditioning in accordance with GB/T6503, wherein the drying temperature of the oven is 105°C, and drying is carried out until a constant weight is obtained.

(8) Boiled water shrinkage:
Determination of boiled water shrinkage is performed according to GB/6505-2008, specifically: taking a section of industrial yarn sample, pre-tension 0.05±0.005cN/dtex, and then marking the two ends 50.00cm away from the middle of the industrial yarn, wrapping it with gauze, putting it in boiling water to boil for 30 min, then, after the sample is dried, measuring the length between the two marked points, and calculating the boiled water shrinkage by the following formula:

boiled water shrinkage = ((initial length - length after shrinkage)/initial length)×100%.

(9) Elongation at break after boiled in water:
The industrial yarn is treated with boiling water for 30 min, and then the sample is dried, and its elongation at break is tested according to (5), which is determined according to GB/T 14344-2008.

(10) Water content:
Determined by Karl Fischer moisture titrator.

(11) Relative viscosity:

Determined by the concentrated sulfuric acid method using Ubbelohde viscometer as follows: to accurately weigh 0.25±0.0002 g of the dried polyamide resin sample, followed by adding thereto 50 mL of concentrated sulfuric acid (96%)to dissolve, and then to measure and record the flow time $t_0$ of concentrated sulfuric acid and the flow time t of the polyamide resin solution in a water bath at a constant temperature of 25°C.
The formula for calculating relative viscosity is: relative viscosity VN=$t/t_0$;
t - flow time of solution;
$t_0$ - flow time of solvent.

(12) Filament breaking (number of times/24 h): In the process of heat preservation, cooling, oiling, pre-tangling, multi-stage drawing, main tangling, and winding of the un-drawn yarn to obtain polyamide 5X industrial yarn, the number of times of filament breaking is manually counted.

(13) Amount of broken filaments: The amount of broken filaments is measured by a hairiness detector during the process of winding 10 kg industrial yarn.

(14) Production rate:

$$\text{production rate} = (\text{weight of finished product fiber}/\text{weight of total input resin}) \times 100\%.$$

(15) Evenness of dyeability test: determined according to FZ/T 50008, dyeing temperature is 110 to 120°C.

**Example 1**

**Preparation of Polyamide 510 Industrial Yarn**

The low-viscosity polyamide 510 resin with a relative viscosity of 2.5 was subjected to high-temperature drying treatment to obtain a tackified polyamide 510 resin; wherein, the high-temperature drying was performed under vacuum, the vacuum degree during vacuuming is -0.1MPa, and the treatment temperature was 140°C, the treatment time was 15 h, and the treatment device was a vacuum drum dryer.

The obtained tackified polyamide 510 resin was subjected to resin humidity conditioning to obtain a high-viscosity polyamide 510 resin, and the relative viscosity of the high-viscosity polyamide 510 resin in 96% sulfuric acid was 3.3, and the water content is 500 ppm; wherein, in the resin humidity conditioning treatment, nitrogen mixed with water steam was used forhumidity conditioning, the nitrogen dew point was controlled at 10°C, and the temperature of the resin humidity conditioning treatment was 100°C.

The above-mentioned high-viscosity polyamide 510 resin was spun, and the spinning process is as follows:

(1) The high-viscosity polyamide 510 resin was heated to a molten state to form a polyamide 510 melt; the heating process was carried out in a screw extruder, and the screw extruder was divided into five zones for heating; wherein, the temperature in the first zone was 235°C, and the temperature in the second zone was 245°C, the temperature in the third zone was 255°C, the temperature in the fourth zone was 265°C, and the temperature in the fifth zone was 275°C.

(2) The polyamide 510 melt obtained in step (1) was fed to the spinning head through the pipeline for drawing to form un-drawn yarn; wherein, the temperature of the spinning head was 280°C, and the pressure of the spinning assembly of the spinning head was 16 MPa.

(3) The un-drawn yarn obtained in step (2) was subjected to heat preservation, cooling, oiling, pre-tangling, multi-stage drawing, main tangling, and winding to obtain polyamide 510 industrial yarn;

The heat preservation adopts an annealer, the annealing height was 250 mm, and the annealing temperature was 260°C; said cooling was air cooling by side blowing, the wind speed of air cooling was 0.8m/s, the air temperature of air cooling was 20°C, and the air humidity of air cooling was 80%; in said oiling, model TCP-80 was used as the spin finish, and the spin finish concentration was 100wt%, without dilution. Two processes with an oiling jet are used for said oiling, the distance of the oiling lip from the spinneret was 4.0 m, and the oil pick-up was 1.1%; the pre-tangling pressure was 2.0 bar;

5 pairs of hot rollers were used to draw in the drawing process, and said drawing was divided into four stages. Specifically, the un-drawn yarn after oiling was first fed to the first pair of hot rollers, and the first-stage pre-drawing was performed between the first pair of hot rollers and the second pair of hot rollers, then the second-stage main drawing was performed between the second pair of hot rollers and the third pair of hot rollers, followed by the third-stage main drawing between the third pair of hot rollers and the fourth pair of hot rollers, and tension heat-setting was also performed, then a fourth-stage of secondary drawing was performed between the fourth pair of hot rollers and the fifth pair of hot rollers, and relaxation heat-setting was also performed. The total draw ratio of drawing was 5.0, and the speed relaxation of the fourth pair of hot rollers and the fifth pair of hot rollers was 80 m/min;

The temperature of the tension heat-setting was 180°C, and the temperature of the relaxation heat-setting was 120°C; the pressure of the main tangling was 3.0 bar; and the winding speed was 2500 m/min.

The performance results of the prepared polyamide 510 industrial yarn are shown in Table 1.

**Example 2**

**Preparation of Polyamide 510 Industrial Yarn**

The low-viscosity polyamide 510 resin with a relative viscosity of 2.5 was subjected to high-temperature drying treatment to obtain a tackified polyamide 510 resin; wherein, the high-temperature drying was performed under vacuum, the vacuum degree during vacuuming was -0.1MPa, and the treatment temperature was 140°C, the treatment time was 15 h, and the treatment device was a vacuum drum dryer.

The obtained tackified polyamide 510 resin was subjected to resin humidity conditioning to obtain a high-viscosity polyamide 510 resin, and the relative viscosity of the high-viscosity polyamide 510 resin in 96% sulfuric acid was 3.3, and the water content was 1000 ppm; wherein, in the resin humidity conditioning treatment, nitrogen mixed with water steam was used for humidity conditioning, the nitrogen dew point was controlled at 13°C, and the temperature of the resin humidity conditioning treatment was 100°C.

The high-viscosity polyamide 510 resin was spun, and the steps and process conditions, etc of the spinning process were the same as those in Example 1.

The performance results of the prepared polyamide 510 industrial yarn are shown in Table 1.

Example 3

**Preparation of Polyamide 510 Industrial Yarn**

The low-viscosity polyamide 510 resin with a relative viscosity of 2.5 is subjected to high-temperature drying treatment to obtain a tackified polyamide 510 resin; wherein, the high-temperature drying was performed under vacuum, the vacuum degree during vacuuming is -0.1MPa, and the treatment temperature was 130°C, the treatment time was 15 h, and the treatment device was a vacuum drum dryer.

The obtained tackified polyamide 510 resin was subjected to resin humidity conditioning to obtain a high-viscosity polyamide 510 resin, and the relative viscosity of the high-viscosity polyamide 510 resin in 96% sulfuric acid was 2.9, and the water content was 500 ppm; wherein, in the resin humidity conditioning treatment, nitrogen mixed with water steam was used to perform the humidity conditioning treatment, the nitrogen dew point was controlled at 10°C, and the temperature of the resin humidity conditioning treatment was 100°C.

The high-viscosity polyamide 510 resin was spun, and the steps and process conditions, etc of the spinning process were the same as those in Example 1.

The performance results of the prepared polyamide 510 industrial yarn are shown in Table 1.

**Example 4**

**Preparation of Polyamide 510 Industrial Yarn**

The raw materials, steps, process conditions, etc. used in this example are substantially the same as those in Example 1, except that in step (3), the spin finish TCP-80 was diluted with water to a concentration of 10 wt%, and oiling was performed.

The performance results of the prepared polyamide 510 industrial yarn are shown in Table 1.

**Example 5**

**Preparation of Polyamide 510 Industrial Yarn**

The raw materials, steps, process conditions, etc. used in this example are substantially the same as those in Example 1, except that in step (3) the spin finish is TC1355.

The performance results of the prepared polyamide 510 industrial yarn are shown in Table 1.

Example 6

**Preparation of Polyamide 510 Industrial Yarn**

The raw materials, steps, process conditions, etc. used in this example are substantially the same as those in Example 5, except that in step (3), the spin finish TC1355 was diluted with water to a concentration of 10wt%, and oiling was performed.

The performance results of the prepared polyamide 510 industrial yarn are shown in Table 1.

**Example 7-1**

**Preparation of Polyamide 510 Industrial Yarn**

The low-viscosity polyamide 510 resin with a relative viscosity of 2.5 was subjected to high-temperature drying treatment to obtain a tackified polyamide 510 resin; wherein, the high-temperature drying was performed under vacuum, the vacuum degree during vacuuming is -0.1MPa, and the treatment temperature was 140°C, the treatment time was 15 h, and the treatment device was a vacuum drum dryer.

The obtained tackified polyamide 510 resin was subjected to resin humidity conditioning to obtain a high-viscosity polyamide 510 resin, and the relative viscosity of the high-viscosity polyamide 510 resin in 96% sulfuric acid was 3.3, and the water content was 500 ppm; wherein, in the resin humidity conditioning treatment, nitrogen mixed with water steam was used for humidity conditioning, the nitrogen dew point was controlled at 10°C, and the temperature of the resin humidity conditioning treatment was 100°C.

wherein, the obtained high-viscosity polyamide 510 resin contains a thermal stabilizer, which was compounded by copper acetate and potassium iodide, and the weight of copper acetate accounts for 250 ppm of the total weight of the polyamide 510 salt (the salt formed in the preparation of polyamide 510 resin using 1,5-pentanediamine and sebacic acid as the raw materials), and the weight of potassium iodide accounts for 1800 ppm of the total weight of the polyamide 510 salt.

The above-mentioned high-viscosity polyamide 510 resin was spun, and the steps and process conditions, etc of the spinning process were the same as those in Example 1.

The performance results of the prepared polyamide 510 industrial yarn are shown in Table 1.

**Example 7-2**

**Preparation of Polyamide 510 Industrial Yarn**

The raw materials, steps, process conditions, etc. used in this example are substantially the same as those in Example 7-1, except that:

the thermal stabilizer contained in the high-viscosity polyamide 510 resin was compounded by copper acetate and potassium iodide. The addition amount of copper acetate accounts for 200 ppm of the total weight of the polyamide 510 salt, and the addition amount of potassium iodide accounts for 1400 ppm of the total weight of the polyamide 510 salt.

**Example 7-3**

**Preparation of Polyamide 510 Industrial Yarn**

The raw materials, steps, process conditions, etc. used in this example are substantially the same as those in Example 7-1, except that:

the thermal stabilizer contained in the the high-viscosity polyamide 510 resin was compounded by copper acetate and potassium iodide, the addition amount of copper acetate accounts for 150 ppm of the total weight of the polyamide 510 salt, and the addition amount of potassium iodide accounts for 1000 ppm of the total weight of the polyamide 510 salt.

**Example 7-4**

**Preparation of Polyamide 510 Industrial Yarn**

The raw materials, steps, process conditions, etc. used in this example are substantially the same as those in Example 7-1, except that:

the thermal stabilizer contained in the the high-viscosity polyamide 510 resin was compounded by copper acetate and potassium iodide, the addition amount of copper acetate accounts for 200 ppm of the total weight of the polyamide 510 salt, and the addition amount of potassium iodide accounts for 800 ppm of the total weight of the polyamide 510 salt.

**Example 8**

**Preparation of Polyamide 510 Industrial Yarn**

The low-viscosity polyamide 510 resin with a relative viscosity of 2.5 was subjected to high-temperature drying treatment to obtain a tackified polyamide 510 resin; wherein, the high-temperature drying was performed under vacuum, the vacuum degree during vacuuming is -0.1MPa, and the treatment temperature was 140°C, the treatment time was 15 h, and the treatment device is a vacuum drum dryer.

The obtained tackified polyamide 510 resin was subjected to resin humidity conditioning to obtain a high-viscosity polyamide 510 resin, and the relative viscosity of the high-viscosity polyamide 510 resin in 96% sulfuric acid was 3.3, and the water content was 500 ppm; wherein, in the resin humidity conditioning treatment, nitrogen mixed with water steam was used for humidity conditioning, the nitrogen dew point was controlled at 10°C, and the temperature of the resin humidity conditioning treatment was 100°C.

wherein, the obtained high-viscosity polyamide 510 resin contains nano-montmorillonite nucleating agent, and its weight accounts for 50 ppm of the total weight of the polyamide 510 salt (the salt formed in the preparation of polyamide 510 resin using 1,5-pentanediamine and sebacic acid as the raw materials).

The high-viscosity polyamide 510 resin was spun, and the steps and process conditions, etc of the spinning process were the same as those in Example 1.

The performance results of the prepared polyamide 510 industrial yarn are shown in Table 1.

## Example 9

### Preparation of Polyamide 511 Industrial Yarn

The raw materials, steps, and process conditions used in this example are substantially the same as those in Example 1, except that the high-viscosity resin was polyamide 511, and the relative viscosity of polyamide 511 in 96% sulfuric acid was 3.3, and the water content was 500 ppm.

The performance results of the prepared polyamide 511 industrial yarn are shown in Table 1.

## Example 10

### Preparation of Polyamide 512 Industrial Yarn

The raw materials, steps and process conditions used in this example are substantially the same as those in Example 1, except that the high-viscosity resin was polyamide 512, and the relative viscosity of polyamide 512 in 96% sulfuric acid was 3.3, and the water content was 500 ppm.

The performance results of the prepared polyamide 512 industrial yarn are shown in Table 1.

## Example 11

### Preparation of Polyamide 513 Industrial Yarn

The raw materials, steps and process conditions used in this example are substantially the same as those in Example 1, except that the high-viscosity resin was polyamide 513, and the relative viscosity of polyamide 513 in 96% sulfuric acid was 3.3, and the water content was 500 ppm.

The performance results of the prepared polyamide 513 industrial yarn are shown in Table 1.

## Example 12

### Preparation of Polyamide 516 Industrial Yarn

The raw materials, steps, and process conditions used in this example are substantially the same as those in Example 1, except that the high-viscosity resin was polyamide 516, and the relative viscosity of polyamide 516 in 96% sulfuric acid was 3.3, and the water content was 500 ppm.

The performance results of the prepared polyamide 516 industrial yarn are shown in Table 1.

## Example 13

### Preparation of Polyamide 510 Industrial Yarn

The low-viscosity polyamide 510 resin with a relative viscosity of 2.5 was subjected to high-temperature drying treatment to obtain a tackified polyamide 510 resin; wherein, the high-temperature drying was performed under vacuum, the vacuum degree during vacuuming is -0.1MPa, and the treatment temperature was 100°C, the treatment time is 8 h, and the treatment device was a vacuum drum dryer.

The obtained tackified polyamide 510 resin was subjected to resin humidity conditioning to obtain a high-viscosity polyamide 510 resin, and the relative viscosity of the high-viscosity polyamide 510 resin in 96% sulfuric acid was 3.3, and the water content was 1500 ppm; wherein, in the resin humidity conditioning treatment, nitrogen mixed with water steam was used to perform the humidity conditioning treatment, the nitrogen dew point was controlled at 10°C, and the temperature of the resin humidity conditioning treatment was 100°C.

The steps, process conditions, etc. of the spinning process are the same as those in Example 1.

The performance results of the prepared polyamide 510 industrial yarn are shown in Table 1.

**Example 14**

**Preparation of Polyamide 510 Industrial Yarn**

The polyamide 510 resin having a relative viscosity of 2.6 and a water content of 500 ppm was heated to a molten state, and spun after forming a melt. The steps, process conditions, etc. of the spinning process are the same as those in Example 1.

The performance results of the prepared polyamide 510 industrial yarn are shown in Table 1.

**Example 15**

**Preparation of Polyamide 510 Industrial Yarn**

The raw materials, steps, process conditions, etc. used in this example are substantially the same as those in Example 1, except that: the annealing height of the annealer adopted in the heat preservation in step (3) was 30 mm, and the annealing temperature was 30°C.

The performance results of the prepared polyamide 510 industrial yarn are shown in Table 1.

**Example 16**

**Preparation of Polyamide 510 Industrial Yarn**

The raw materials, steps, process conditions, etc. used in this example are substantially the same as those in Example 1, except that the height of the oiling lip in step (3) was 1.2 m from the spinneret.

The performance results of the prepared polyamide 510 industrial yarn are shown in Table 1.

**Example 17**

**Preparation of Polyamide 510 Industrial Yarn**

The raw materials, steps and process conditions used in this example are substantially the same as those in Example 1, except that the speed relaxation of the fourth pair of hot rollers and the fifth pair of hot rollers in step (3) is 0 m/min.

The performance results of the prepared polyamide 510 industrial yarn are shown in Table 1.

**Example 18**

**Preparation of Polyamide 510 Industrial Yarn**

The raw materials, steps, process conditions, etc. used in this example are substantially the same as those in Example 1, except that the pre-tangling pressure in step (3) was 0.5 bar.

The performance results of the prepared polyamide 510 industrial yarn are shown in Table 1.

**Example 19**

**Preparation of Polyamide 56 Industrial Yarn**

The raw materials, steps and process conditions used in this example are substantially the same as those in Example 1, except that the high viscosity resin was polyamide 56, the relative viscosity of polyamide 56 resin was 3.3, and the water content was 500 ppm.

The performance results of the prepared polyamide 56 industrial yarn are shown in Table 1.

**Example 20**

**Preparation of Polyamide 56 Industrial Yarn**

The raw materials, steps and process conditions used in this example are substantially the same as those in Example 1, except that the high viscosity resin was polyamide 56, the relative viscosity of polyamide 56 resin was 3.3, and the water content was 500 ppm. The temperature of the tension heat-setting in step (3) was 215°C.

The performance results of the prepared polyamide 56 industrial yarn are shown in Table 1.

**Example 21**

**Preparation of Polyamide 56 Industrial Yarn**

The raw materials, steps, process conditions, etc. used in this example are substantially the same as those in Example 20, except that the water content of the polyamide 56 resin was 1000 ppm.

The performance results of the prepared polyamide 56 industrial yarn are shown in Table 1.

**Comparative Example 1**

**Preparation of Polyamide 6 Industrial Yarn**

The raw materials, steps and process conditions used in Comparative Example 1 are substantially the same as those in Example 1, except that the high viscosity resin was polyamide 6, the relative viscosity of polyamide 6 resin was 3.3, and the water content was 500 ppm.

The performance results of the prepared polyamide 6 industrial yarn are shown in Table 1.

Table 1 Performance test results of polyamide industrial yarn

| Group | Moisture regain (%) | Breaking tenacity (cN/dtex) | Elongation at break (%) | Modulus (cN/dtex) | boiled water shrinkage (%) | Elongation at break after boiled in water (%) | Heat shrinkage (%) | Retention rate of the heat-resistant strength (%) | Retention rate of the breaking tenacity after humidity conditioning (%) | Filament breaking (times/24h) | Broken filaments (pieces/10kg) | Production rate (%) |
|---|---|---|---|---|---|---|---|---|---|---|---|---|
| Example1 | 2.1 | 8.0 | 19.3 | 45.2 | 7.2 | 22.8 | 7.8 | 92.2 | 95.2 | 4 | 7 | 96.8 |
| Example2 | 2.2 | 7.8 | 20.2 | 44.3 | 7.0 | 23.4 | 7.6 | 91.2 | 94.4 | 3 | 5 | 96.7 |
| Example3 | 2.2 | 7.9 | 19.5 | 43.8 | 7.3 | 24.0 | 7.8 | 91.8 | 94.8 | 2 | 4 | 96.5 |
| Example4 | 2.1 | 8.0 | 20.0 | 46.2 | 7.8 | 24.2 | 7.6 | 92.2 | 93.8 | 2 | 5 | 97.2 |
| Example5 | 2.1 | 8.1 | 19.8 | 45.8 | 7.6 | 23.8 | 7.7 | 92.8 | 94.5 | 3 | 3 | 98.2 |
| Example6 | 2.1 | 8.2 | 20.3 | 46.6 | 7.3 | 23.5 | 7.3 | 92.3 | 95.0 | 2 | 4 | 97.5 |
| Example7-1 | 2.1 | 8.4 | 19.5 | 47.2 | 6.8 | 21.0 | 6.5 | 95.0 | 97.0 | 2 | 2 | 98.2 |
| Example7-2 | 2.1 | 8.3 | 19.8 | 47.0 | 6.9 | 21.8 | 6.7 | 94.5 | 96.7 | 2 | 3 | 98.0 |
| Example7-3 | 2.1 | 8.3 | 20.2 | 46.8 | 7.0 | 22.0 | 6.8 | 94.0 | 96.0 | 3 | 3 | 97.8 |
| Example7-4 | 2.1 | 8.2 | 20.5 | 46.5 | 7.1 | 22.5 | 7.0 | 93.4 | 95.5 | 3 | 4 | 97.6 |
| Example8 | 2.1 | 8.5 | 20.6 | 47.5 | 7.0 | 23.2 | 6.8 | 94.5 | 96.8 | 2 | 4 | 97.8 |
| Example9 | 2.0 | 8.0 | 19.3 | 43.2 | 7.5 | 23.8 | 7.9 | 91.2 | 94.3 | 2 | 5 | 95.3 |
| Example 10 | 1.8 | 8.1 | 19.8 | 42.5 | 7.8 | 23.6 | 8.2 | 90.8 | 94.8 | 3 | 4 | 97.5 |
| Example11 | 1.5 | 7.9 | 19.0 | 38.6 | 7.9 | 23.4 | 8.4 | 88.9 | 95.2 | 3 | 4 | 98.0 |
| Example 12 | 0.9 | 7.8 | 20.9 | 36.5 | 7.1 | 23.6 | 8.5 | 86.5 | 96.3 | 3 | 3 | 96.8 |
| Example 13 | 2.5 | 6.8 | 20.2 | 33.5 | 9.5 | 26.2 | 10.4 | 82.5 | 86.8 | 16 | 142 | 78.5 |
| Example 14 | 2.4 | 6.0 | 20.4 | 34.2 | 9.3 | 27.5 | 10.6 | 81.2 | 87.2 | 19 | 158 | 75.3 |
| Example 15 | 2.5 | 6.4 | 19.6 | 33.8 | 9.4 | 26.8 | 10.5 | 80.4 | 88.2 | 17 | 160 | 80.2 |
| Example 16 | 2.4 | 6.6 | 20.3 | 32.5 | 9.8 | 27.3 | 10.4 | 82.5 | 89.0 | 25 | 170 | 72.4 |
| Example 17 | 2.5 | 7.0 | 19.5 | 33.4 | 10.5 | 27.5 | 10.8 | 80.6 | 87.8 | 15 | 138 | 83.3 |
| Example 18 | 2.5 | 7.2 | 20.3 | 32.5 | 9.6 | 26.9 | 10.5 | 81.5 | 88.5 | 22 | 178 | 75.5 |
| Example 19 | 4.5 | 7.8 | 19.5 | 38.2 | 10.2 | 26.5 | 10.3 | 85.5 | 84.8 | 5 | 6 | 88.5 |

(continued)

| Group | Moisture regain (%) | Breaking tenacity (cN/dtex) | Elongation at break (%) | Modulus (cN/dtex) | boiled water shrinkage (%) | Elongation at break after boiled in water (%) | Heat shrinkage (%) | Retention rate of the heat-resistant strength (%) | Retention rate of the breaking tenacity after humidity conditioning (%) | Filament breaking (times/24h) | Broken filaments (pieces/10kg) | Production rate (%) |
|---|---|---|---|---|---|---|---|---|---|---|---|---|
| Example 20 | 4.5 | 8.5 | 20.3 | 48.3 | 7.5 | 25.8 | 6.3 | 92.0 | 92.4 | 2 | 3 | 97.2 |
| Example 21 | 4.6 | 7.3 | 19.4 | 34.2 | 10.5 | 27.8 | 10.8 | 83.5 | 85.6 | 18 | 155 | 80.5 |
| Comparative Example 1 | 4.5 | 8.1 | 19.8 | 45.2 | 9.5 | 29.0 | 8.5 | 90.3 | 82.8 | 2 | 3 | 95.5 |

It can be seen from the above examples and the results in Table 1 that by using polyamide 5X resin with a wide range of water content as the spinning raw material, industrial yarn with better comprehensive properties can be prepared. In particular, polyamide 510 resins can have a wider range of water content than polyamide 56 resins. Specifically, the polyamide 510 of Example 1 and Example 2 have a water content of 500 ppm and 1000 ppm, respectively, the polyamide 510 industrial yarn thus prepared has a breaking tenacity of ≥7.8cN/dtex, a modulus of ≥44.3cN/dtex, and boiled water shrinkage <_7.2%, heat shrinkage <_7.8%; and better performance in strength and dimensional stability. In addition, the results of Examples and Table 1 fully show that if the water content of the polyamide resin is too high, a degradation reaction will occur during the high-temperature melting process, which reduces the breaking tenacity and modulus of the prepared industrial yarn; if a polyamide resin having a relatively low viscosity (its molecular weight is low) is used, subsequent multi-stage high drawing ratio results in poorer filament properties.

The examples and the results in Table 1 also show that the polyamide 510 industrial yarn can be heat-set at a lower temperature than that of the polyamide 56 without affecting the properties of the industrial yarn. For example, the temperature of tension heat-setting with polyamide 510 as raw material was 180°C, and the comprehensive performance of the prepared polyamide industrial yarn is better; while the industrial yarn prepared in Example 19 with polyamide 56 as raw material and the tension heat-setting temperature of 180°C has poorer comprehensive properties than the industrial yarn prepared in Example 20 (heat-setting temperature of 215°C), its performance is poorer.

On the other hand, the process conditions of step (3) have a great influence on the performance of the industrial yarn. For example, the use of a lower annealing height and temperature will be unfavorable for the subsequent multi-stage high-power drawing; the height of the oiling lip from the spinneret is lower, which is easy to increase the amount of broken filaments and monofils breaking; there is no relaxation step in the drawing process, that is, when the relaxation is 0 m/min, the dimensional stability of the prepared polyamide industrial yarn will be deteriorated; the adopted pre-tangling pressure is small, which will be unfavorable for the subsequent multi-stage high-power drawing, and it is easy to generate more filaments.

## Application example

The industrial yarns prepared in the above examples and comparative examples were respectively ply twisted, and woven, and then tested for evenness of dyeability. The evenness of dyeability are graded as follows: the industrial yarns of Examples 1 to 12 are graded more than 3.5, the industrial yarns of Examples 13 to 19, Example 21, and Comparative Example 1 are graded 3, and the industrial yarn of Example 20 is graded 3.5.

In addition, after the polyamide 5X industrial yarn of the present disclosure absorbs water, the performance of the yarn changes less, which makes it more advantageous in terms of dimensional stability in subsequent processing and application. If the boiled water shrinkage of polyamide fiber is large, shrinkage will be serious during the dyeing process, which will easily lead to uneven dyeing. Especially in the cheese dyeing process commonly used in the field of spinning, if the shrinkage of industrial yarn is large after absorbing water, due to the different internal and external tension of the yarn, the tension of the yarn close to the bobbin is large, and the dye is difficult to penetrate, so it is not easy to dye, resulting in color difference in the internal and external dyeing; secondly, the tension after shrinkage is different during the unwinding process of the cheese, which is difficult to unwind, easy to cause broken filaments, increases processing difficulty, and makes the production cost investment larger. The large boiled water shrinkage will easily cause the fabric to shrink greatly in the dyeing process, making it difficult to control the width. Especially after the subsequent fabric is made into clothing, if the shrinkage is large after hot water washing, the shape retention will be poor.

Unless otherwise defined, the terms used in the present disclosure have the meanings commonly understood by those skilled in the art.

The embodiments described in the present disclosure are only for exemplary purposes and are not intended to limit the protection scope of the present disclosure. Those skilled in the art can make various other substitutions, changes and improvements within the scope of the present disclosure. Therefore, the present disclosure is not limited to the above-described embodiments, but only by the claims.

## Claims

1. A polyamide industrial yarn, the raw materials for producing the industrial polyamide yarn at least comprise: 1,5-pentanediamine and a linear aliphatic dibasic acid; or polyamide 5X obtained from polymerization of 1,5-pentanediamine and a linear aliphatic dibasic acid as monomers.

2. The polyamide industrial yarn according to claim 1, **characterized in that** the linear aliphatic dibasic acid contains 6 to 18 carbon atoms.

3. The polyamide industrial yarn according to claim 1, **characterized in that** the linear aliphatic dibasic acid is selected from one or more of adipic acid, azelaic acid, sebacic acid, undecanedioic acid, dodecanedioic acid, tridecanedioic acid, tetradecanedioic acid, pentadecanedioic acid, hexadecane dibasic acid, heptadecanedioic acid, octadecanedioic acid, maleic acid and $\Delta$9-1,18 octadecenedioic acid.

4. The polyamide industrial yarn according to claim 1, **characterized in that** the polyamide industrial yarn has a moisture regain of $\leq$2.2%.

5. The polyamide industrial yarn according to claim 1, **characterized in that** the polyamide industrial yarn has a breaking tenacity of 7.5 to 9.5 cN/dtex; and a retention rate of the heat-resistant strength of 85 to 95%; after humidity conditioning, the retention rate of the breaking tenacity of the polyamide industrial yarn is $>\_$92%.

6. The polyamide industrial yarn according to claim 1, **characterized in that** the polyamide industrial yarn has an elongation at break of 16 to 24%.

7. The polyamide industrial yarn according to claim 1, **characterized in that** the polyamide industrial yarn has a modulus of $\geq$35 cN/dtex.

8. The polyamide industrial yarn according to claim 1, **characterized in that** the polyamide industrial yarn has a heat shrinkage of $\leq$ 10.0%.

9. The polyamide industrial yarn according to claim 1, **characterized in that** the polyamide industrial yarn has a boiled water shrinkage of $\leq$ 9.0%, and an elongation after boiled in water of $\leq$ 25.0%.

10. The polyamide industrial yarn according to claim 1, obtained from spinning raw materials by a spinning process, and the spinning raw materials comprise a polyamide 5X resin, and the relative viscosity of the polyamide 5X resin in 96% sulfuric acid is 2.2-2.7.

11. The polyamide industrial yarn according to claim 10, **characterized in that** the polyamide 5X resin comprises a thermal stabilizer and/or a second additive, the thermal stabilizer comprises one or more of copper acetate, potassium iodide, copper chloride, cuprous iodide, cupric oxide, and cuprous oxide; the second additive comprises one or more of a matting agent, a flame retardant, an antioxidant, an ultraviolet absorber, an infrared absorber, a crystal nucleating agent, a fluorescent brightener and an antistatic agent.

12. A method for preparing the polyamide industrial yarn according to any one of claims 1 to 11, comprising the steps of:

(1) heating spinning raw materials to a molten state to form a melt, the spinning raw materials comprise a polyamide 5X resin;
(2) drawing the melt to form un-drawn yarn; and
(3) subjecting the un-drawn yarn to heat preservation, cooling, oiling, pre-tangling, multi-stage drawing, main tangling and winding to obtain the polyamide industrial yarn;

**characterized in that** a tension heat-setting treatment and/or a relaxation heat-setting treatment are performed in any one stage of the multi-stage drawing.

13. The method according to claim 12, **characterized in that** the polyamide 5X resin has a relative viscosity in 96% sulfuric acid of 2.8 to 4.0, and the water content of the polyamide 5X resin is 100 to 1000 ppm.

14. The method according to claim 13, **characterized in that** the method for preparing the polyamide 5X resin comprises the steps of:

subjecting the polyamide 5X resin having a relative viscosity of 2.2 to 2.7 in 96% sulfuric acid to high-temperature drying treatment to obtain a tackified polyamide 5X resin; and
subjecting the tackified polyamide 5X resin to resin humidity conditioning treatment to obtain the polyamide 5X resin having a relative viscosity of 2.8 to 4.0.

15. The method according to claim 14, **characterized in that** the high-temperature drying treatment is performed under negative pressure state or inert gas protection, and the vacuum degree of the negative pressure state is -0.06 to -0.1MPa;

the temperature of the high-temperature drying treatment is 130 to 160°C, and the treatment time is 10 to 25 h.

16. The method according to claim 14, **characterized in that** the temperature of the resin humidity conditioning treatment is 85 to 110°C; the resin humidity conditioning treatment is performed by using nitrogen mixed with water steam, and the nitrogen dew point is controlled at -15 to 15°C.

17. The method according to claim 12, **characterized in that** said heating in said step (1) is performed in a screw extruder, and the screw extruder is divided into five zones for heating, the temperature in the first zone is 220 to 250°C, the temperature in the second zone is 230 to 260°C, the temperature in the third zone is 240 to 270°C, the temperature in the fourth zone is 250 to 280°C, and the temperature in the fifth zone is 260 to 290°C.

18. The method according to claim 12, **characterized in that** said step (2) comprises: ejecting the melt through a spinneret of a spinning head to obtain the un-drawn yarn; the temperature of the spinning head is 260 to 290°C, and the pressure of the spinning assembly of the spinning head is 10 to 22 MPa.

19. The method according to claim 12, **characterized in that** said step (3) adopts an annealer for heat preservation, the annealing height is 100 to 300 mm, and the annealing temperature is 200 to 300°C;

the cooling treatment is air cooling by side blowing or ring blowing;
in the oiling treatment process, the height of the oiling lip from the spinneret is >_2.Sm, and the oil pick-up is 0.7 to 1.2%;
the pre-tangling pressure is 1 to 2.5 bar;
the total draw ratio of the multi-stage drawing is 4.5 to 6.0;
the temperature of the tension heat-setting treatment is 150 to 200°C;
the temperature of the relaxation heat-setting treatment is 100 to 160°C.

20. The use of the polyamide industrial yarn according to any one of claims 1 to 11 in sewing thread, tire cord, airbag yarn, mold-releasing cloth, water cloth, canvas, safety belt, rope, fishing net, industrial filtering cloth, conveyor belt, parachute, tent or luggage.

## INTERNATIONAL SEARCH REPORT

| International application No. |
|---|
| **PCT/CN2020/082600** |

**A. CLASSIFICATION OF SUBJECT MATTER**

D01F 6/60(2006.01)i; D01F 6/90(2006.01)i; D01F 1/10(2006.01)i; C08G 69/26(2006.01)i; C08G 69/28(2006.01)i; D01D 5/08(2006.01)i; D01D 5/088(2006.01)i; D01D 5/098(2006.01)i; D01D 5/12(2006.01)i; D01D 10/02(2006.01)i

According to International Patent Classification (IPC) or to both national classification and IPC

**B. FIELDS SEARCHED**

Minimum documentation searched (classification system followed by classification symbols)

D01F6/-,D01F1/-,C08G69/-,D01D5/-,D01D10/-

Documentation searched other than minimum documentation to the extent that such documents are included in the fields searched

Electronic data base consulted during the international search (name of data base and, where practicable, search terms used)

CNPAT, ISI, CNKI, WPI, EPODOC: 上海凯赛生物, CIBT美国公司, 凯赛（乌苏）生物, 孙朝续, 陈万钟, 高祥, 刘修才, 聚酰胺, 尼龙, 戊二胺, 丝, 纱, 纤维, 熔融, 熔体, 初生丝, 增粘, 热定型, 缓冷, 断裂强度, 断裂伸长率, 收缩率, 粘度, 保持率, 模量, 含水率, polyamide, nylon, tentanediamine, +pentamethylenediamine, cadaerine, +pentanediamine, +pentamethylene diamine, yarn?, silk, filament?, melt+, molten, nascent yarn, raw silk, strength, relative viscosity, elongation, shrinkage

**C. DOCUMENTS CONSIDERED TO BE RELEVANT**

| Category* | Citation of document, with indication, where appropriate, of the relevant passages | Relevant to claim No. |
|---|---|---|
| X | CN 106835329 A (CATHAY INDUSTRIAL BIOTECH LTD. et al.) 13 June 2017 (2017-06-13) <br> description embodiment 1, paragraphs 0040-0041, 0076 | 1-6, 8-20 |
| X | CN 109930230 A (CATHAY (WUSU) BIOLOGICAL MATERIAL CO., LTD. et al.) 25 June 2019 (2019-06-25) <br> description, embodiment 5 | 1-3, 6, 8 |
| X | CN 110904535 A (CATHAY (WUSU) BIOLOGICAL MATERIAL CO., LTD. et al.) 24 March 2020 (2020-03-24) <br> description, embodiment 1 | 1-3, 6, 7, 10 |
| X | CN 106868624 A (CATHAY INDUSTRIAL BIOTECH LTD. et al.) 20 June 2017 (2017-06-20) <br> description, embodiment 1 | 1-3, 8 |
| X | JP 2006144163 A (MITSUBISHI CHEMICAL CORPORATION) 08 June 2006 (2006-06-08) <br> description, embodiment 1 | 1-3 |

☐ Further documents are listed in the continuation of Box C.    ☑ See patent family annex.

| | |
|---|---|
| \*   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **04 December 2020** | **28 December 2020** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/082600**

| Patent document cited in search report | | | Publication date (day/month/year) | Patent family member(s) | | | Publication date (day/month/year) |
|---|---|---|---|---|---|---|---|
| CN | 106835329 | A | 13 June 2017 | CN | 110616471 | A | 27 December 2019 |
| | | | | CN | 106835329 | B | 12 November 2019 |
| CN | 109930230 | A | 25 June 2019 | | None | | |
| CN | 110904535 | A | 24 March 2020 | | None | | |
| CN | 106868624 | A | 20 June 2017 | CN | 106868624 | B | 23 August 2019 |
| JP | 2006144163 | A | 08 June 2006 | | None | | |

Form PCT/ISA/210 (patent family annex) (January 2015)

**REFERENCES CITED IN THE DESCRIPTION**

**Patent documents cited in the description**

- JP 353 A